(19) Europäisches Patentamt
European Patent Office
Office européen des brevets

(11) **EP 1 706 029 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(21) Anmeldenummer: 05714882.7

(22) Anmeldetag: **20.01.2005**

(51) Int Cl.:
***A61B 5/00*** *(2006.01)*    ***G01B 9/02*** *(2006.01)*
***G01N 21/47*** *(2006.01)*

(86) Internationale Anmeldenummer:
**PCT/DE2005/000076**

(87) Internationale Veröffentlichungsnummer:
**WO 2005/070286 (04.08.2005 Gazette 2005/31)**

(54) **INTERFEROMETRISCHE VORRICHTUNG**

INTERFEROMETRIC DEVICE

DISPOSITIF INTERFEROMETRIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.01.2004 DE 102004003484**
**09.07.2004 DE 102004033187**

(43) Veröffentlichungstag der Anmeldung:
**04.10.2006 Patentblatt 2006/40**

(73) Patentinhaber: **Medizinisches Laserzentrum Lübeck GmbH**
**D-23562 Lübeck (DE)**

(72) Erfinder:
• **KOCH, Peter**
**23558 Luebeck (DE)**

• **KOCH, Edmund**
**01309 Dresden (DE)**

(74) Vertreter: **Biehl, Christian et al**
**Boehmert & Boehmert,**
**Anwaltssozietät,**
**Niemannsweg 133**
**24105 Kiel (DE)**

(56) Entgegenhaltungen:
**DE-A1- 3 730 091          DE-C1- 10 207 186**

• **KOCH P ET AL: "Linear OCT system with down conversion of the fringe pattern" PROCEEDINGS OF THE SPIE - THE INTERNATIONAL SOCIETY FOR OPTICAL ENGINEERING SPIE-INT. SOC. OPT. ENG USA, Bd. 5316, Nr. 1, 2004, Seiten 260-267, XP002328240 ISSN: 0277-786X**

**Beschreibung**

Die Erfindung betrifft eine interferometrische Vorrichtung nach dem Oberbegriff des Hauptanspruchs. Vorrichtungen zur optischen Kohärenztomographie (OCT) umfassen ein Interferometer und eine Auswerteeinheit zum elektronischen Erfassen eines Interferenzmusters.

Interferometer und Verfahren zur Ermittlung der Laufzeitverteilung von reflektiertem bzw. gestreutem Licht sind unter der Bezeichnung "Optical Coherence Tomography (OCT)" geläufig. Beispielsweise wird in DE 199 29 406 A1 ein solches Verfahren zur mikroskopischen Auflösung von Oberflächenstrukturen wie auch zur Messung der Rückstreuung aus verschiedenen Tiefenlagen einer Probe vorgestellt. Das dort beschriebene Interferometer basiert auf dem bekannten Michelson-Interferometer und verwendet Licht aus dem nahen Infrarotspektrum mit sehr kurzer Kohärenzlänge. Das Licht wird zuerst in einen Proben- und einen Referenzanteil aufgeteilt, auf die Probe bzw. auf einen Spiegel gelenkt, dort zurückgestreut bzw. reflektiert, nach Einkopplung in Lichtleiterfasern in eine Detektionseinheit geführt und dort zur Interferenz gebracht. Das Interferometer nach der DE 199 29 406 A1 arbeitet - im Unterschied zu zeitaufgelösten OCT-Interferometeren - ohne bewegte Teile (□ NoMotion OCT), insbesondere ohne den üblichen Phasenmodulator zur Veränderung der Lichtlaufzeit im Referenzarm. Vielmehr tritt das aus dem Probenzweig und dem Referenzzweig des Interferometers zurückkehrende Licht an zwei verschiedenen Orten in die Auswerteeinheit ein, in der es räumlich überlagert wird, wobei anhand der räumlichen Intensitätsverteilung in diesem überlagerten Bereich die Laufzeitverteilung des Lichts im Probenzweig bestimmt wird. Es entsteht in Analogie zum bekannten Doppelspaltversuch ein Muster aus Interferenzstreifen (Fringes) auf einem Detektionsschirm.

Dabei ergibt sich aufgrund der Laufzeitverteilung des Probenlichts eine Intensitätsverteilung entlang des Interferenzmusters, d.h. die tiefenaufgelöste Information über die Probe ist in der räumlichen, zeitlich stationären Struktur des Interferenzlichts enthalten. Eine - typische Ausgestaltung dieses Schirms, insbesondere für die rechnergestützte Auswertung, ist ein linearer Bildsensor. Gängig ist auch die im Folgenden verwendete Bezeichnung Zeilensensor, wobei dieser i. a. aus mehreren Zeilen von Pixeln bestehen kann.

Die auf den Zeilensensor einfallende Lichtintensität besteht in der OCT aus einem dominanten, längs des Zeilensensors konstanten Hintergrund, der keine Probeninformation trägt, und einem mit der Zeilenkoordinate (oder Pixelindex) veränderlichen Anteil, der gewöhnlich mehrere Größenordnungen kleiner als der Hintergrund ist. Der veränderliche Anteil lässt sich als Produkt einer schnell oszillierenden Trägerwelle - Interferenzfringes mit Fringeabstand $F$ oder Wellenzahl $\kappa_F = 2\pi/F$ - mit einer langsam veränderlichen Amplitudenmodulation $\alpha(x)$ als Funktion der Zeilenkoordinate $x$ beschreiben, so dass eine normierte Intensität etwa gegeben ist durch

$$(1) \quad I_0(x) := 1 + \alpha(x)\cos(\kappa_F\, x + \varphi)$$

wobei $\varphi$ die i. a. unbekannte Phase ist. Das in der OCT interessierende Signal gewinnt man aus der in jedem Pixel durch Lichtabsorption erzeugten, messbaren Ladung zunächst in der Gestalt einer nach der Pixelanordnung indizierten Folge $S(n), n=0,\dots,N-1$ mit $N$ als Zahl der Pixel auf dem Zeilensensor. Bei Pixeln der Breite $P$ ergibt sich das $n$-te Folgenglied etwa zu

$$(2) \quad S(n) := \int_{-P/2+nP}^{P/2+nP} I_0(x)\,dx$$

und mit Hilfe einer rechnergestützten Auswertung wird hiernach die gesuchte Modulation $\alpha(x)$ approximiert. Dabei setzt man voraus, dass $\alpha$ über einen einzelnen Pixel hinweg in guter Näherung als Konstante, $\alpha(n)$, angesehen werden kann. Die Integrationsaufgabe betrifft also in erster Linie die schnell veränderliche Trägerwelle. Das Abtasttheorem verlangt, diese Trägerwelle pro Fringeabstand F an mindestens zwei Stellen abzutasten, um vom Informationsgehalt nichts zu verlieren.

Bei einer OCT-Vorrichtung ohne bewegte Teile beträgt F typisch einige zehn Mikrometer, und die Pixelbreite gängiger Sensoren liegt unter 10 Mikrometer. Mit einer solchen Vorrichtung kann eine Scantiefe von etwa 100 $\mu$m erreicht werden, wohingegen diese bei zeitaufgelösten Systemen bis zu 2 mm beträgt. Um solche Scantiefen auch mit einem Zeilensensorsystem zu erzielen, müssten sehr viel mehr Fringes vom Zeilensensor erfasst werden, d.h. der Fringeabstand $F$ müsste kleiner eingerichtet sein und der Sensor mehr Pixel auf engerem Raum aufweisen. Eine Abschätzung für diese Anzahl $N$ lautet:

$$(3) \quad N = 2 \cdot 2 \cdot \frac{nD}{\lambda},$$

wobei $\lambda$ die mittlere Wellenlänge, $D$ die Scantiefe und n der Brechungsindex der Probe ist. Dies führt auf Zeilensensoren mit ca. 10.000 Pixeln. Zwar gibt es heute solche CCD-Sensoren, doch ist der Aufwand zur schnellen Digitalisierung der Signale hoch, und auch die maximal speicherbare Lichtmenge ist bei diesen Sensoren gering. Besser geeignet wären CMOS-Sensoren, bei denen sich aber derartig hohe Pixelzahlen nicht ohne weiteres erzielen lassen.

Aus der DE 37 30 091 A1 ist bekannt, die Aufzeichnung eines räumlichen Interferenzmusters mit einem Zeilensensor durch Ausnutzung des Moiré-Effekts zu verbessern. Dazu wird ein optisches Gitter (auch: Maske) mit periodischer Hell-Dunkel-Struktur vor dem Zeilensensor angeordnet, wobei die Gitterkonstante (auch: Maskenperiode $M$ = Breite eines Hell-Dunkel-Zyklus) so eingerichtet wird, dass sie dem Fringeabstand $F$ des Interferogramms möglichst genau entspricht. Diese Vorgehensweise kommt dem optischen Abwärtsmischen von Signalen auf ein niederfrequentes Zwischenband gleich, wobei nach der Lehre der DE 37 30 091 A1 vorzugsweise auf die Differenzfrequenz Null gemischt werden soll. Im Ergebnis wird dann nur die gesuchte Einhüllende $\alpha(x)$ der Intensitätsmodulation auf den Zeilensensor abgebildet, und diese kann mit der herkömmlichen Pixelzahl leicht abgetastet werden.

Die Verwendung einer Maske nach der DE 37 30 091 A1 ist aber nicht ohne Nachteil. Das auf jeden Pixel einfallende Licht setzt sich aus je einem Anteil des Interferenzlichts und des inkohärenten Untergrunds zusammen (s. Gleichung (1)), wobei letzterer dominiert. Auf einem einzelnen Pixel lassen sich beide Anteile nicht trennen. Vielmehr müsste man benachbarte Pixel miteinander vergleichen und Differenzen bilden. Dies scheitert jedoch in der Praxis daran, dass aus beleuchtungstechnischen Gründen auch die Intensität des Untergrunds nicht auf allen Pixeln gleich ist. Zudem hängt der Interferenzlichtbeitrag zum Signal $S(n)$ auf dem n-ten Pixel gemäß Gleichungen (1) und (2) von der eher zufälligen Phasenlage der Intensitätsmodulation $I_0$ gegenüber der Maske ab. Im ungünstigsten Fall kann dieser Beitrag bei Integration über die Pixelbreite sogar verschwinden.

Die DE 37 30 091 A1 schlägt zur Vermeidung dieser Nachteile vor, die Länge des Referenzarms des Interferometers zeitlich zu variieren. Dies kann zum einen zur gezielten Weglängenänderung um z.B. $\pm \lambda/4$ genutzt werden, was die Phasenlage um $\pm 90°$ verschieben würde. Zum anderen kann durch periodisches Ändern des Referenzarms mit definierter Frequenz auf jedem Pixel ein zeitlich veränderliches Signal erfasst werden, dessen Variation allein dem Interferenzlicht zuzuschreiben ist. Diese Variation kann dann herausgefiltert werden.

Will man indes keine beweglichen Komponenten realisieren, insbesondere keinen veränderlichen Referenzarm, so ist die Verwendung einer Maske nach der Lehre der DE 37 30 091 A1 aus den genannten Gründen eher nachteilig.

Es ist nun Aufgabe der vorliegenden Erfindung, eine interferometrische Vorrichtung mit Zeilensensor, insbesondere zur OCT, anzugeben, die keine bewegten Teile, insbesondere keinen zeitlich veränderlichen Referenzarm, enthält und doch die einfache Trennung von Nutzsignal und Hintergrund erlaubt, wenn mehrere Interferenzfringes auf jeden einzelnen Pixel entfallen.

Diese Aufgabe wird gelöst durch ein Interferometer nach Anspruch 1. Die abhängigen Ansprüche geben vorteilhafte Ausgestaltungen an.

Die Erfindung wird anhand folgender Figuren erläutert:

Figur 1   zeigt den schematischen Aufbau eines NoMotion-OCT-Interferometers nach dem Prinzip des Michelson-Interferometers.

Figur 2   zeigt ein typisches Signal, wie es auf dem Zeilensensor gemessen wird, wenn sich ein Spiegel im Probenarm befindet. Die Intensität des: Signalanteils des Interferenzlichts ist gegen den Pixelindex des Zeilensensors aufgetragen.

Figur 3   zeigt ein Beispiel für die Erzeugung einer Maske auf den Pixeln des Zeilensensors durch Bedeckung mit metallischen Dots.

Figur 4   skizziert die Wirkungsweise einer Prismenmaske als Alternative zu einer Ausblendungsmaske.

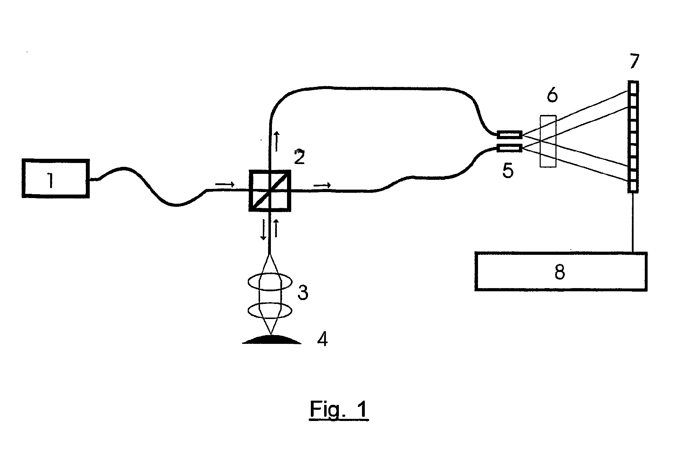

Fig. 1 stellt dabei eine zur OCT geeignete interferometrische Vorrichtung ohne bewegte Teile dar. Das Licht aus einer breitbandigen Lichtquelle 1 mit kurzer Kohärenzlänge wird durch einen Strahlteiler 2 (oder Faserkoppler) in Referenz- und Probenstrahl aufgeteilt. Der Probenstrahl wird über eine Abbildungsoptik 3 auf die Probe 4 gelenkt und von dieser zurückgestreut. Das Proben- und Referenzlicht werden über getrennte Lichtleiterfasern in eine Auswerteeinheit geführt, wo die Strahlen aus beabstandeten Faserenden 5 austreten und über eine Zylinderlinse 6 auf einen Detektor 7 (Zeilensensor) gelangen. Analog zum klassischen Doppelspalt-Experiment entsteht auf dem Detektor ein Interferenzstreifenmuster entlang der Sensorzeile, das elektronisch von einer Aufzeichnungseinrichtung 8 erfasst und weiterverarbeitet wird.

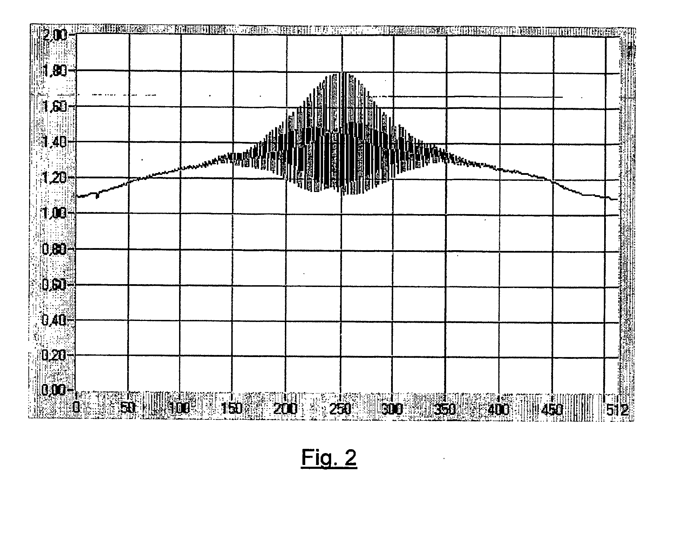

Fig. 2 zeigt das typische Ergebnis einer Messung, wenn die Probe durch einen Spiegel ersetzt wird. Bezugszeichen 10 weist auf eine Reihe von Prismen hin, 12 auf die Pixel.

Es wird besonders darauf hingewiesen, dass sich der Fringeabstand $F$ der Interferenzstreifen auf dem Zeilensensor 7 aus den benutzten Lichtwellenlängen und dem Abstand der Austrittsenden 5 voneinander sowie zum Detektor 7 bestimmt. Geht man von ebenen Lichtwellenfronten aus, ist $F$ allein eine Funktion des von den Lichtstrahlen eingeschlossenen Winkels, der sich aus den genannten Abständen berechnen lässt. In Fig. 1 sind die beiden Austrittsfasern 5 exemplarisch parallel ausgerichtet. Beispielsweise ließe sich $F$ weiter verringern, wenn eines der beiden Faserenden 5 zusätzlich noch seitlich verschwenkt würde.

Um eine Scantiefe zu erreichen, die mit der von zeitaufgelösten OCT-Vorrichtungen vergleichbar ist, wird man $F$ so einrichten, dass mehrere Interferenzstreifen auf jeden einzelnen Pixel entfallen. Das damit auftretende Abtastproblem wird nun auch mit Hilfe einer periodischen Maske gelöst, die bevorzugt unmittelbar vor oder auf den Pixeln des Zeilensensors angeordnet wird. Im Unterschied zur DE 37 30 091 A1 orientiert sich die Wahl der Maskenperiode $M$ dabei aber nur mittelbar am Fringeabstand $F$, wie die nachstehende Diskussion erklären soll. Eine genaue Übereinstimmung von $M$ und $F$, wie von der DE 37 30 091 A1 gefordert, soll sogar vermieden werden. Man wird vielmehr bevorzugt $F$ stets so einrichten, dass es sich von $M$ signifikant unterscheidet.

Die Maske wird bevorzugt so gestaltet, dass ihre Lichtdurchlässigkeit zwischen undurchlässig und transparent variiert (maximaler Kontrast), und die Maske im Mittel die halbe Lichtintensität durchlässt. Dies lässt sich insbesondere erreichen, wenn der Verlauf der Durchlässigkeit ($\rightarrow$ Maskenfunktion) entlang des Zeilensensors einer einfachen mathematischen Funktion wie etwa einer Rechteck-, Sägezahn- oder Sinusfunktion folgt.

Das auf den Sensor einfallende Licht mit einer Intensitätsverteilung gemäß Gleichung (1) wird beim Durchqueren der Maske mit der Maskenfunktion multipliziert. Mit der Wellenzahl der Maskenperiode $\kappa_M = 2\pi/M$ ergibt sich, dass das effektiv auf dem Sensor messbare, gemischte Signal nunmehr Anteile der Differenzfrequenz $\kappa_F - \kappa_M$ und der Summenfrequenz $\kappa_F + \kappa_M$ enthält, wobei letzterer durch Tiefpassfilterung aus der Auswertung entfernt wird und keine Rolle spielt.

Es bleibt also die Aufgabe, ein Intensitätssignal der Gestalt

$$(4) \quad I^M{}_0(x) \sim \alpha(x)\cos((\kappa_F - \kappa_M)x)$$

mit dem Sensor zu erfassen und auszuwerten. Dies entspricht nun einer niederfrequenten Trägerwelle multipliziert mit der Amplitudenmodulation $\alpha(x)$, die die Probeninformation enthält.

Um jede Vollwelle der Trägerwelle mit mindestens zwei Pixeln abzutasten, muss gelten

$$(5) \quad 2P < \frac{2\pi}{|\kappa_F - \kappa_M|},$$

und man kann und wird das Interferenzmuster grundsätzlich so einrichten, dass $|\kappa_F - \kappa_M|$ dabei von Null verschieden ist, da man - wie bereits dargelegt - sonst nicht auf die zeitliche Variation des Referenzarms verzichten könnte.

Bezeichnet man mit $\kappa_P = 2\pi/P$ die Pixelwellenzahl, so lässt sich die Aufgabe der erfindungsgemäßen Maske so verstehen, dass Sie einen Wellenzahlumklapp der wahren Fringewellenzahl in das abtastbare Nyquist-Intervall

$$(6) \quad 0 < |\kappa_F - \kappa_M| < \frac{1}{2}\kappa_P$$

bewirken soll. Allerdings reicht das Realisieren der Bedingung in Ungleichung (6) für gute Messergebnisse in der OCT noch nicht zwingend aus. Das bis hier benutzte Bild einer einzelnen, amplitudenmodulierten Trägerwelle, die es abzutasten gilt, ist häufig sinnvoll. Aber hier ist ein anderes Bild besser geeignet.

Bei der OCT handelt es sich um einen Spezialfall der Weißlichtinterferometrie, d.h. die Lichtquelle emittiert ein endlich breites Spektrum von Wellenlängen um eine Zentralwellenlänge $\lambda_0$ herum verteilt. Beispielsweise kann man annehmen, das für die Messung verwertbare Spektrum sei durch $[\lambda_0 - \Delta\lambda, \lambda_0 + \Delta\lambda]$ gegeben, wenn $\Delta\lambda$ die spektrale Breite der Lichtquelle bezeichnet. Das auf dem Zeilensensor entstehende, amplitudenmodulierte Streifenmuster mit dem Fringeabstand $F$ ist eine Superposition von Streifenmustern mit Wellenzahlen aus einem kontinuierlichen Intervall $[\kappa^0{}_F - \Delta\kappa, \kappa^0{}_F + \Delta\kappa]$, wobei $\kappa^0{}_F$ - die dominante, mittlere Fringewellenzahl, von der bisher die Rede war - der Wellenlänge $\lambda_0$ zugeordnet sein soll und dann näherungsweise

$$(7) \qquad \Delta\kappa \approx \frac{\Delta\lambda}{\lambda_0}\kappa_F^0$$

gilt. Zur Befriedigung der Abtastbedingung ist eine Maske vor der Sensorzeile nun so einzurichten, dass das Umklappen in das Nyquist-Intervall für alle beitragenden Wellenzahlen $\kappa_F \in [\kappa^0{}_F - \Delta\kappa, \kappa^0{}_F + \Delta\kappa]$ simultan erfolgen kann. Dabei dürfen beim Umklappen aber keine abwärts gemischten Wellenzahlen mit unterschiedlichen Vorzeichen entstehen, d.h. gefordert ist

$$(8) \qquad 0 < \frac{\kappa_F - \kappa_M}{\kappa_P} < \frac{1}{2} \qquad \text{oder} \qquad 0 > \frac{\kappa_F - \kappa_M}{\kappa_P} > -\frac{1}{2}$$

für jeweils alle $\kappa_F \in [\kappa^0{}_F - \Delta\kappa, \kappa^0{}_F + \Delta\kappa]$ mit einer fest gewählten Maske, bzw. einem festen $\kappa_M$. Würden Wellenzahlen gleichen Betrags aber entgegen gesetzter Vorzeichen entstehen, so wären die Signalbeiträge der zugehörigen Lichtanteile im weiteren Verlauf der Auswertung - insbesondere nach der Tiefpassfilterung - nicht mehr voneinander zu unterscheiden. Man verlöre einen signifikanten Anteil der über das gesamte Nutzspektrum verteilten Probeninformation.

Offenbar sind die genannten Forderungen insbesondere dann erfüllt, wenn man anstelle der Ungleichungen (8) verlangt

$$(9) \qquad \Delta\kappa < \left|\kappa_F^0 - \kappa_M\right| < \frac{1}{2}\kappa_P \doteq \Delta\kappa$$

oder unter Benutzung von Gleichung (7)

$$(9) \qquad \frac{\Delta\lambda}{\lambda_0} < \left|1 - \frac{\kappa_M}{\kappa_F^0}\right| < \frac{1}{2}\frac{\kappa_P}{\kappa_F^0} - \frac{\Delta\lambda}{\lambda_0} \qquad ,$$

wobei $\lambda_0$, $\Delta\lambda$ und $\kappa_P$ apparativ vorgegeben und $\kappa^0{}_F$ vom Experimentator wählbar oder bestimmbar ist. Ungleichung (9) legt dann erfindungsgemäß ein günstiges Intervall für die Wahl einer Maske vor dem Zeilensensor fest, wobei hervorzuheben ist, dass $\kappa_M$ größer oder kleiner als $\kappa^0{}_F$ sein darf, doch eine Übereinstimmung ist ausgeschlossen.

Kehrt man nun in das eingangs benutzte Bild einer einzelnen Trägerwelle auf dem Zeilensensor gemäß Gleichung (4) zurück, lässt sich Ungleichung (9) geeignet schreiben als

$$(10) \qquad \frac{\Delta\lambda}{\lambda_0} < \left|1 - \frac{F}{M}\right| < \frac{1}{2}\frac{F}{P} - \frac{\Delta\lambda}{\lambda_0} \qquad .$$

Beispiel: Um mit einem Zeilensensor der Pixelbreite $P = 8\,\mu\text{m}$ ein Interferenzmuster mit Fringeabstand $F = 2{,}5\,\mu\text{m}$ aufzuzeichnen, soll eine geeignete Maske bestimmt werden. Die Lichtquelle emittiere bei $\lambda_0 = 830\,\text{nm}$ mit einer spektralen Breite $\Delta\lambda = 40\,\text{nm}$, d.h. das zur OCT genutzte Spektrum liege zwischen 790 nm und 870 nm. Nach Ungleichung (10) ergibt sich sofort, dass Maskenperiode und Fringeabstand sich zu unterscheiden haben um einen Wert zwischen 4,8 % und 10,8 %.

Das durch die erfindungsgemäße Maske entstehende Signal nach Gleichung (4) kann jetzt mit dem Zeilensensor erfasst und mittels eines Bandpassfilters bearbeitet werden, der nur Intensitätsbeiträge in der Frequenzumgebung

der Trägerfrequenz $|\kappa_F - \kappa_M|$ isoliert. Die gesuchte Einhüllende ergibt sich dann durch Betragsbildung aus dem gefilterten Signal. Der Untergrund wird auf diese Weise abgezogen, und die Phasenlage gegenüber Maske und Sensor spielt keine Rolle, weil sie sich nur auf die Lage der Nulldurchgänge der Trägerwelle auswirkt. Da diese nun mit der gegebenen Pixelauflösung gut abgetastet werden kann, ist ihre Einhüllende stets mit der gleichen Genauigkeit bestimmbar.

Es kann geschehen, dass Ungleichung (10) keine Lösungen mehr anbietet, z.B. wenn die linke Seite die Rechte übersteigt. Dies wird insbesondere geschehen, wenn Lichtquellen mit zu großer spektraler Breite benutzt oder eine zu große Zahl von Fringes auf ein einzelnes Pixel abgebildet werden. In solchen Fällen kann die Maske keine Hilfe mehr sein. Ohnehin würde man für große $\kappa_M$ mit erheblichen Fertigungsschwierigkeiten rechnen müssen.

Es ist vorteilhaft, wenn die Anzahl von Maskenperioden pro Pixelbreite $P$ eine ganze Zahl ist, d.h. bevorzugt $P=nM$ mit $n=1,2,3, ....$ Anderenfalls könnten Messartefakte entstehen, insbesondere durch den Schatten der Maske, der durch die gleichmäßige, inkohärente Untergrundbeleuchtung auf die Pixel fällt. Dies würde sich besonders bei Pixeln mit über die Pixelbreite konstanter Empfindlichkeit nachteilig auswirken. Im obigen Beispiel wäre also die Wahl $M = P/3 = 2,67$ μm sehr günstig und innerhalb der Spezifikation von Ungleichung (9), denn dann wäre $|1 - \kappa_M/\kappa^0_F| = 6,25$ %.

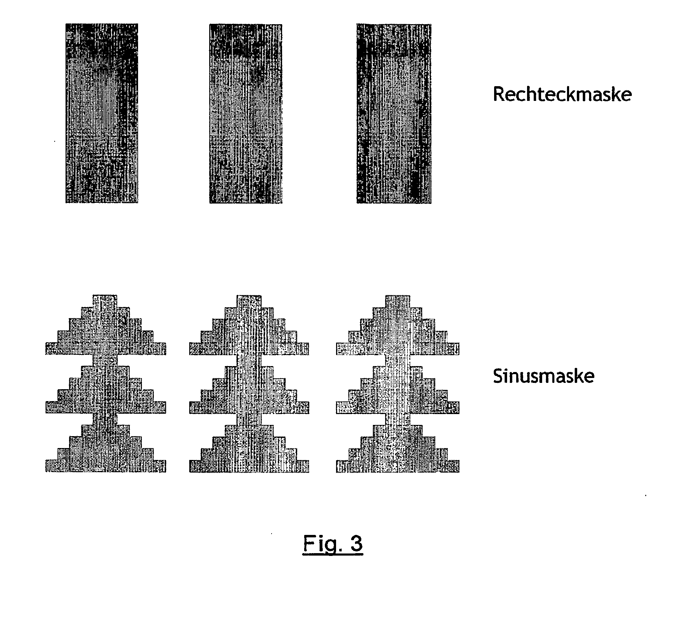

Eine vorteilhafte Ausführungsform der erfindungsgemäßen Maske besteht in der Erzeugung eines Metallisierungslayers auf den Pixeln während der Halbleiterfertigung. Metallisierungslayer sind in CMOS Prozessen ohnehin vorgesehen und dienen da normalerweise der Kontaktierung einzelner Transistoren, sie können aber problemlos auch zur Abdekkung von Teilen der Pixel benutzt werden. Da sie ohnehin Teil des CMOS Prozesses sind, entstehen während der Fertigung auch keine Mehrkosten. Besonders interessant ist dieser Ansatz, weil hier im Prinzip das Layout eines kommerziellen Sensors nur minimal modifiziert werden müsste. Zur Erzeugung eines einer bestimmten Funktion folgenden Verlaufs der Blendendurchlässigkeit entlang der Sensorzeile bietet sich z.B. an, die Bedeckung durch senkrecht zur Zeilenachse statistisch verteilte, metallische Dots vorzunehmen, deren Dichte sich längs des Sensors gemäß der angestrebten Maskenfunktion ändert. Genauso können aber auch feste periodische Muster - wie in Fig. 3 exemplarisch zu sehen - auf die Pixel aufgebracht werden. Tatsächlich kommt es auf die Details der Maskenfunktion für die günstige Wirkung nicht an. Wesentlich ist vielmehr eine möglichst gute Periodizität mit der erfindungsgemäßen Periodenlänge.

Eine weitere vorteilhafte Ausgestaltung liegt darin, den Zeilensensor samt Maske geeignet zu krümmen, um Verzerrungen des von Punktlichtquellen herrührenden Interferenzmusters im Außenbereich des planaren Schirms zu kompensieren.

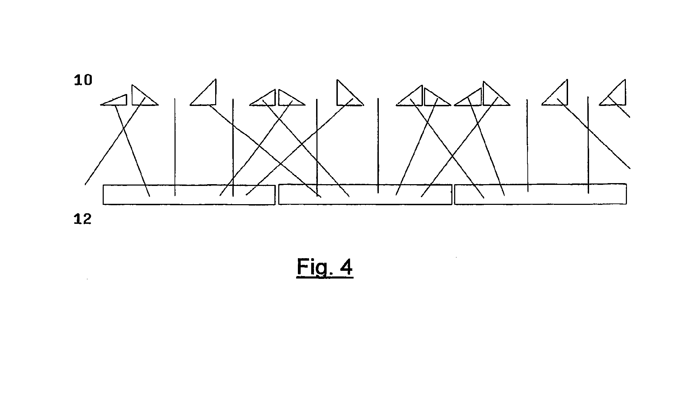

Da in der OCT typisch mit sehr kleinen Nutzsignalintensitäten gearbeitet wird, ist es wünschenswert, möglichst keine Lichtanteile durch eine Maske auszublenden. Daher wird als eine aufwendigere, aber womöglich sehr nützliche, Variante eine speziell strukturierte Maske vorgeschlagen, die kein Licht absorbiert, sondern nur eine andere Verteilung des Lichts bewirkt. Vorteilhafterweise besteht diese aus einer Anordnung von Miniprismen oder Linsen, die sich vor einem Zeilensensor mit mindestens 2 Zeilen von Pixeln befindet. Anstelle einer periodischen Ausblendung schickt man eine Hälfte des Lichts auf die zweite Zeile des Detektors, wie dies in Fig. 4 schematisch dargestellt wird. Die Periode, mit der sich die Ablenkrichtungen der Miniprismen abwechseln, entspricht dabei der vorher berechneten Periode der erfindungsgemäßen Maske. Solche Zeilen von Miniprismen lassen sich ähnlich wie Linsenarrays mit Hilfe von Lasern oder auch durch Ätzverfahren realisieren, die aus der Siliziumtechnik bekannt sind. Für Licht der Wellenlänge 1,3 μm lässt sich die Maske auch aus Silizium herstellen.

Neben der Ablenkung über Brechung lässt sich die Ablenkung auch durch Beugungsgitter (aus Intensitätsgründen möglichst Phasengitter) bewirken. Da mechanische Verfahren zur Herstellung entsprechender Transmissionsgitter schwierig sind, sich dafür holografischoptische Elemente (HOE) hervorragend geeignet. Solche Phasengitter lassen sich auf fotografischem Film preiswert in großen Stückzahlen fertigen.

**Patentansprüche**

**1.** Vorrichtung zur Weißlichtinterferometrie umfassend eine Lichtquelle (1) der Hauptemissionswellenlänge $\lambda_0$ und der spektralen Breite $\Delta\lambda$ und eine Auswerteeinheit (7,8) mit einem Zeilensensor (7) der Pixelbreite $P$ zum Erfassen eines Interferenzstreifenmusters mit Streifenabstand $F$, wobei vor dem Zeilensensor (7) eine Maske angeordnet ist, die eine periodisch modulierte Lichtdurchlässigkeit längs des Zeilensensors aufweist, **dadurch gekennzeichnet, dass** die Periodenlänge $M$ der Maske so eingerichtet ist, dass die Bedingung

$$\frac{\Delta\lambda}{\lambda_0} < \left|1 - \frac{F}{M}\right| < \frac{1}{2}\frac{F}{P} - \frac{\Delta\lambda}{\lambda_0}$$

erfüllt ist.

2. Vorrichtung nach Anspruch 1, **dadurch gekennzeichnet, dass** die Periodenlänge *M* ein ganzahliger Bruchteil der Pixelbreite *P* ist.

3. Vorrichtung nach einem der vorangehenden Ansprüche, **dadurch gekennzeichnet, dass** die Maske durch Bedekkung der Zeilensensorpixel mit einer Vielzahl lichtundurchlässiger Punkte, insbesondere aus Metall, ausgebildet ist.

4. Vorrichtung nach Anspruch 3, **dadurch gekennzeichnet, dass** die lichtundurchlässigen Punkte senkrecht zur Zeilensensorachse statistisch verteilt sind und die Bedeckungsdichte entlang der Achse gemäß einer periodischen Funktion, insbesondere einer Sinus-, Rechteck- oder Sägezahnfunktion, eingerichtet ist.

5. Vorrichtung nach Anspruch 3, **dadurch gekennzeichnet, dass** die lichtundurchlässigen Punkte in einer regelmäßigen, entlang des Zeilensensors sich periodisch wiederholenden Anordnung aufgebracht sind.

6. Vorrichtung nach einem der Ansprüche 1 oder 2, **dadurch gekennzeichnet, dass** der Zeilensensor wenigstens zwei Pixelzeilen umfasst und die Maske als eine sich abwechselnde Anordnung lichtdurchlässiger und lichtablenkender Elemente ausgebildet ist, wobei das abgelenkte Licht von der zweiten Pixel zeile erfasst wird.

7. Vorrichtung nach Anspruch 6, **dadurch gekennzeichnet, dass** die Lichtablenkung durch Brechung erfolgt.

8. Vorrichtung nach Anspruch 6, **dadurch gekennzeichnet, dass** die Lichtablenkung durch Beugung an Gittern erfolgt.

**Claims**

1. Device for white light interferometry comprising a light source (1) of main emission wavelength $\lambda_0$ and spectral width $\Delta\lambda$ and an evaluating unit (7, 8) with a line sensor (7) of pixel width P for detecting an interference fringe pattern with a fringe spacing F, a mask being placed in front of the line sensor (7) having a periodically modulated light transmittance along said line sensor, **characterized in that** the period length M of the mask is such as to fulfil the condition

$$\frac{\Delta\lambda}{\lambda_0} < \left|1 - \frac{F}{M}\right| < \frac{1}{2}\frac{F}{P} - \frac{\Delta\lambda}{\lambda_0}.$$

2. Device according to claim 1, **characterized in that** the period length M is an integral fraction of the pixel width P.

3. Device according to one of the preceding claims, **characterized in that** the mask is formed by covering the line sensor pixel with a plurality of opaque points, particularly metallic dots.

4. Device according to claim 3, **characterized in that** the opaque points are statistically distributed perpendicular to the line sensor axis and the covering density along the axis is in accordance with a periodic function, particularly a sine, rectangular or sawtooth function.

5. Device according to claim 3, **characterized in that** the opaque points are applied in a regular arrangement which is periodically repeated along the line sensor.

6. Device according to one of the claims 1 or 2, **characterized in that** the line sensor comprises at least two pixel lines and the mask is constructed as an alternate arrangement of transparent and light-deflecting elements, the deflected light being detected by the second pixel line.

7. Device according to claim 6, **characterized in that** light deflection takes place by refraction.

8. Device according to claim 6, **characterized in that** light deflection takes place by diffraction on gratings.

**Revendications**

1.  Dispositif pour l'interférométrie en lumière blanche comprenant une source de lumière (1) de longueur d'onde d'émission principale $\lambda_0$ et de largeur spectrale $\Delta\lambda$ et une unité d'évaluation (7, 8) avec un capteur linéaire (7) de largeur de pixel $P$ pour la saisie d'un motif de franges d'interférences avec un interfrange $F,$ dans lequel un masque qui présente une perméabilité à la lumière modulée périodiquement le long du capteur linéaire est disposé devant le capteur linéaire (7), **caractérisé en ce que**
    la longueur de période $M$ du masque est conçue de manière que la condition

$$\frac{\Delta\lambda}{\lambda_0} < \left| 1 - \frac{F}{M} \right| < \frac{1}{2}\frac{F}{P} - \frac{\Delta\lambda}{\lambda_0}$$

soit remplie.

2.  Dispositif selon la revendication 1, **caractérisé en ce que** la longueur de période $M$ est une fraction entière de la largeur de pixel $P.$

3.  Dispositif selon l'une des revendications précédentes, **caractérisé en ce que** le masque est formé par recouvrement des pixels du capteur linéaire par une pluralité de points imperméables à la lumière, en particulier en métal.

4.  Dispositif selon la revendication 3, **caractérisé en ce que** les points imperméables à la lumière sont répartis statistiquement perpendiculairement à l'axe du capteur linéaire et la densité de recouvrement le long de l'axe est arrangée selon une fonction périodique, en particulier une fonction sinusoïdale, rectangulaire ou en dents de scie.

5.  Dispositif selon la revendication 3, **caractérisé en ce que** les points imperméables à la lumière sont appliqués dans une disposition régulière, se répétant périodiquement le long du capteur linéaire.

6.  Dispositif selon l'une des revendications 1 ou 2, **caractérisé en ce que** le capteur linéaire comprend au moins deux lignes de pixels et le masque est conçu comme une disposition alternante d'éléments perméables à la lumière et d'éléments déviateurs de lumière, la lumière déviée étant saisie par la deuxième ligne de pixels.

7.  Dispositif selon la revendication 6, **caractérisé en ce que** la déviation de lumière est réalisée par réfraction.

8.  Dispositif selon la revendication 6, **caractérisé en ce que** la déviation de lumière est réalisée par diffraction sur des réseaux.

**Fig. 1**

Fig. 2

Rechteckmaske

Sinusmaske

## Fig. 3

**10**

**12**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19929406 A1

- DE 3730091 A1